# EUROPÄISCHE PATENTSCHRIFT

(11) **EP 2 265 475 B1**
(45) Veröffentlichungstag und Bekanntmachung des Hinweises auf die Patenterteilung: **03.08.2011**
(21) Anmeldenummer: 08735298.5
(22) Anmeldetag: 10.04.2008
(51) Int. Cl.: B60R 25/00, G07C 9/00, H01H 9/02, H01H 27/06

(54) **ELEKTRONISCHER SCHLÜSSEL ZUR FERNBEDIENUNG VON FAHRZEUGEN**
ELECTRONIC KEY FOR THE REMOTE CONTROL OF VEHICLES
CLEF ÉLECTRONIQUE POUR LA COMMANDE À DISTANCE DE VÉHICULES

(43) Veröffentlichungstag der Anmeldung: 29.12.2010
(73) Patentinhaber: Huf Hülsbeck & Fürst GmbH & Co. KG, 42551 Velbert (DE)
(72) Erfinder: SERSCH, Jürgen, 42659 Solingen (DE)
(74) Vertreter: Patentanwälte Buse, Mentzel, Ludewig
(86) Internationale Anmeldenummer: PCT/EP2008/003071
(87) Internationale Veröffentlichungsnummer: WO 2009/124572

(56) Entgegenhaltungen:
- EP-A- 1 837 831
- DE-A1-102006 046 802
- DE-T2-602004 002 197

## Beschreibung

Die Erfindung richtet sich auf einen elektronischen Schlüssel der im Oberbegriff des Anspruches 1 angegebenen Art, der zur Fernbedienung von Schließsystemen in einem Fahrzeug dient. Der elektronische Schlüssel umfasst ein Gehäuse, worin zunächst eine Elektronik für die Fernbedienung mit zugehöriger elektrischer Batterie angeordnet sind.

Im Notfall, wenn die Elektronik oder die Batterie versagen, gibt es im Gehäuse einen Notschlüssel für eine mechanische Betätigung der Schließsysteme im Fahrzeug. Der Notschlüssel besitzt einen zu seiner Handhabe dienenden Schlüsselkopf und einen daran sitzenden Schlüsselschaft, der die mechanische Codierung in Form von Einschnitten od. dgl. besitzt. Bei Nicht-Gebrauch des Notschlüssels ist zwischen dem Schlüsselkopf und dem Gehäuse eine Verriegelungseinrichtung zur Positionssicherung des Notschlüssels vorgesehen An einer Außenfläche am Gehäuse ist ein lösbarer Deckel vorgesehen. Im Anbringungszustand des Deckels wird eine Öffnung im Gehäuse verschlossen. Im Lösezustand des Deckels ist das Gehäuseinnere durch die Gehäuseöffnung zugänglich, um z.B. die elektrische Batterie auswechseln zu können.

Ein solcher elektronischer Schlüssel ist aus der DE 20 2005 004 994 U1 bekannt. Das Gehäuse dieses Schlüssels hat einen lösbaren Deckel, der in seinem Anbringungszustand am Restgehäuse durch Rastmittel festgehalten wird. Fällt der bekannte elektronische Schlüssel zu Boden, so besteht die Gefahr, dass sich der Deckel ungewollt vom restlichen Gehäuse löst und die in ihm enthaltene elektrische Batterie herausfällt und verloren geht. Man kann den Deckel durch eine erhöhte Haltekraft der Rastmittel zwar besser am Restgehäuse festhalten, aber dann wird das gewollte Lösen des Deckels vom Restgehäuse erschwert; man muss dann ein Hilfswerkzeug einsetzen, um den Deckel lösen zu können. Das ist umständlich und zeitaufwendig. Einen elektronischen Schlüssel mit dem Merkmalen des Oberbegriffs des Anspruchs 1 zeigt die EP-A-1837831.

Bei diesem bekannten elektronischen Schlüssel befindet sich der Notschlüssel im Gehäuseinneren unterhalb des Deckels. Der aktive Riegelteil der bekannten Verriegelungseinrichtung besteht aus einem federbelasteten Riegelhaken und befindet sich im Gehäuse, wo auch die Handhabe angeordnet ist, um den Riegelteil zeitweise unwirksam zu setzen. Der zugehörige passive Gegenriegelteil der Verriegelungseinrichtung ist in Form von zwei Riegelöffnungen am Schlüsselkopf des Notschlüssels angeordnet. Am Schlüsselkopf befindet sich nämlich eine Öse, die zur Befestigung eines Schlüsselrings od. dgl. dient. Beim Eingriff des Riegelhakens in der ersten Riegelöffnung ist auch die Einhängeöse im Gehäuse eingeschoben. Beim Eingriff in die zweite Riegelöffnung ragt die Einhängeöse vom Notschlüssel aus dem Gehäuse heraus und kann zum Anschluss des Schlüsselrings genutzt werden.

Der Erfindung liegt die Aufgabe zugrunde, einen Schlüssel der im Oberbegriff des Anspruches 1 genannten Art zu entwickeln, dessen Deckel sich zwar vom Gehäuse ohne Hilfswerkzeuge bequem lösen lässt, der Deckel aber dennoch zuverlässig am Gehäuse verankert ist. Dadurch soll ein ungewolltes Lösen des Deckels vom Restgehäuse verhindert werden, was sich andernfalls ergeben würde, wenn der elektronische Schlüssel zu Boden fällt. Diese Aufgabe wird durch die im Anspruch 1 angegebenen Merkmale erreicht, denen folgende besondere Bedeutung zukommt.

Der Deckel und der Notschlüssel bilden eine vormontierte Baueinheit gegenüber dem Gehäuse, die als Ganzes gehandhabt wird, um die Öffnung im Gehäuse zugänglich zu machen oder zu verschließen. In ihrer Einbaulage im Gehäuse verschließt die Baueinheit die Gehäuseöffnung und gibt sie erst in ihrer Ausbaulage frei. Die Verriegelungseinrichtung für den Notschlüssel wird zugleich zur Sicherung der Einbaulage der ganzen Baueinheit im Gehäuse genutzt. Das hat zur Folge, dass über die Verriegelungseinrichtung des Notschlüssels auch der zur Baueinheit gehörende Deckel des Gehäuses in seinem Anbringungszustand in der Gehäuseöffnung zuverlässig festgehalten wird. Um zusammen mit der Baueinheit den Deckel in einen Lösezustand gegenüber dem Gehäuse zu bringen und das Gehäuseinnere durch die Gehäuseöffnung zugänglich zu machen, braucht die Verriegelungseinrichtung lediglich durch eine Handhabe unwirksam gesetzt zu werden. Ein Werkzeug zum Öffnen des Deckels ist bei der Erfindung nicht erforderlich. Die Verriegelungseinrichtung hat bei der Erfindung also eine Doppelfunktion. Die erste Funktion besteht darin, den Notschlüssel in seiner Ruheposition zu sichern. In ihrer zweiten Funktion kann die Notschlüssel-Verriegelung über die Baueinheit auch den Deckel in dessen Anbringungszustand sichern.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1,: in Vergrößerung, einen schematischen Längsschnitt durch den elektronischen Schlüssel gemäß der Erfindung,
- Fig. 2: eine perspektivische Darstellung der Rückseite des in Fig. 1 gezeigten Schlüssels, wo die Außenansicht eines die Erfindung kennzeichnenden vormontierten Baueinheit zu sehen ist, die aus einer Kombination eines Gehäuse-Deckels mit einem Notschlüssels besteht,
- Fig. 3: in einer zu Fig. 2 analogen Ansicht eine erste Phase einer mehrstufigen Einrenkbewegung, mittels der die Baueinheit aus ihrer Einbaulage von Fig. 2 in eine Ausbaulage gemäß Fig. 5a und 5b überführt werden soll,
- Fig. 4a: eine nächste Phase der Einrenkbewegung beim Ausbau der Baueinheit,
- Fig. 4b: ein vergrößertes Detail von Fig. 4a nachdem, der besseren Deutlichkeit wegen, Wandteile des Gehäuses weggebrochen worden sind und so einen Durchblick auf Rastmittel zwischen der Baueinheit und dem Gehäuse zeigt,
- Fig. 5a: in einer zu Fig. 3 und 4 analogen perspektivischen Darstellung die Baueinheit in ihrer Ausbaulage aus dem Gehäuse,
- Fig. 5b: in einer analogen perspektivischen Darstellung ein Bruchstück des Gehäuses nach dem Ausbau der Baueinheit von Fig. 5a,
- Fig. 6: eine Seitenansicht der Baueinheit von Fig. 5a,
- Fig. 7: in einer zu Fig. 5a analogen perspektivischen Darstellung die Unterseite der Baueinheit nach ihrem Ausbau aus dem Gehäuse und
- Fig. 8: das Endstück des in Fig. 5b gezeigten Gehäuses nach dem Ausbau der Baueinheit von Fig. 5a.

Der Aufbau des erfindungsgemäBen elektronischen Schlüssels 10 ist am besten aus dem Längsschnitt von Fig: 1 zu erkennen. Es gibt zunächst ein Gehäuse 11, das seinerseits aus mehreren Teilen zusammengesetzt sein kann. Im Gehäuseinneren 14 befinden sich auf einer Leiterplatte 41 elektronische, elektrische und/oder mechanische Bauteile 42, die von einer ebenfalls im Gehäuseinneren 14 angeordneten elektrischen Batterie 40 elektrisch gespeist werden. Die Bauteile 42 dienen u.a. für eine Fernbedienung von Schließsystemen in einem Fahrzeug. Zur manuellen Betätigung der Fernbedienung befindet sich auf der Schauseite 12 vom Gehäuse 11 ein Tastenfeld 43. An der Rückseite 13 vom Gehäuse 11 dagegen ist eine Öffnung 15 vorgesehen, die normalerweise von einer besonderen, noch näher zu beschreibenden Baueinheit 20 verschlossen ist. Die Gehäuse-Öffnung 15 muss aber geöffnet werden, wenn man Zugang zum Gehäuseinneren 14 gewinnen will. Dies geschieht insbesondere dann, wenn die verbrauchte Batterie 40 im Gehäuseinneren 14 ausgewechselt werden soll. Dann wird bei der Erfindung die ganze Baueinheit 20 entfernt.

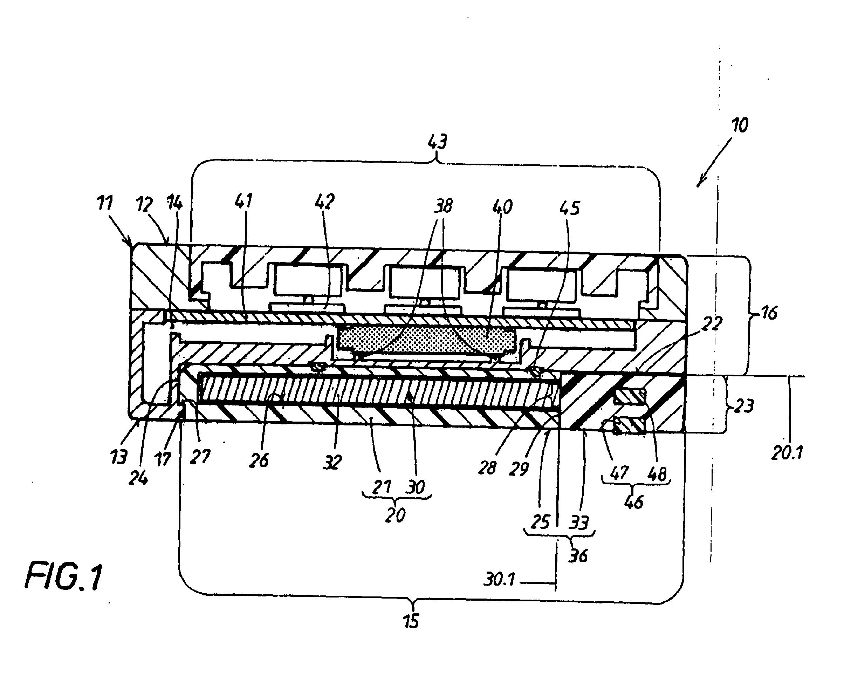

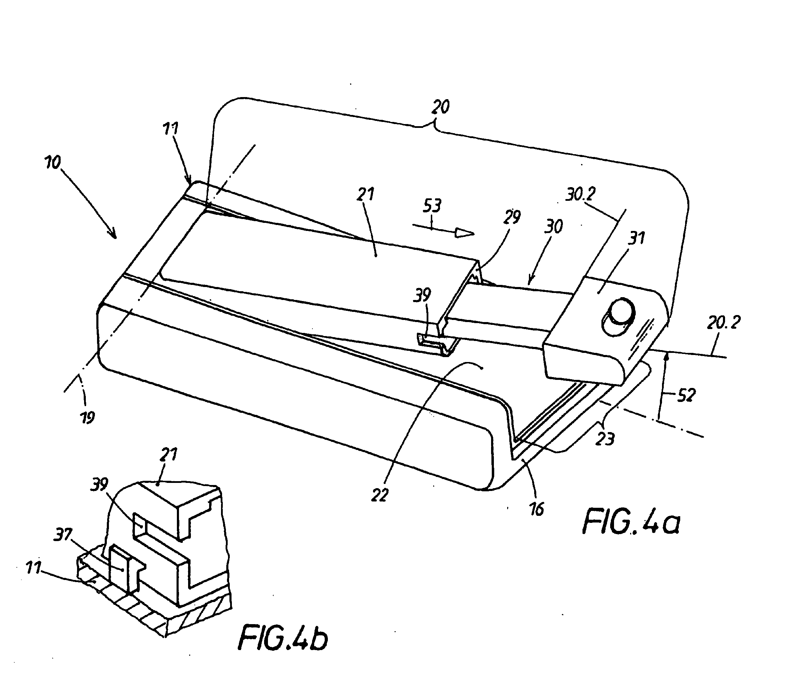

Im vorliegenden Fall entsteht die Öffnung 15 durch einen aus Fig. 4, 5b und 8 entnehmbaren offenen Kanal 22, der an dem einen Stirnende 16 vom Gehäuse 11 einen offenen Kanaleingang 23 besitzt. Wie Fig. 1 erkennen lässt, befindet sich am gegenüberliegenden Kanalinnenende 24 eine Hinterschneidung 17, die von einer Innenwand des Gehäuses 11 gebildet wird.

Die Baueinheit 20 besteht aus einer flachen Hülse 21 einerseits und einem Notschlüssel 30 andererseits. Der Notschlüssel 30 wird bei Nicht-Gebrauch in die Hülse 21 gesteckt, wodurch die Baueinheit 20 entsteht. Die Baueinheit 20 ist so dimensioniert, dass sie in ihrer durch eine Hilfslinie 20.1 in Fig. 1 veranschaulichten "Einbaulage" den Kanal 22 im Wesentlichen formschlüssig ausfüllt. Der Notschlüssel 30 umfasst einen Schlüsselkopf 31, der zu seiner Handhabung dient, und einen damit verbundenen Schlüsselschaft 32, der mit einer nicht näher gezeigten mechanischen Codierung versehen ist. Der Notschlüssel 30 dient im Notfall zur mechanischen Betätigung der Schließsysteme, wenn die Elektronik versagt. Die Schließsysteme im Fahrzeug umfassen nämlich auch mechanische Schlösser, mit denen der Notschlüssel 30 über seinen Schlüsselschaft 32 zusammenwirkt.

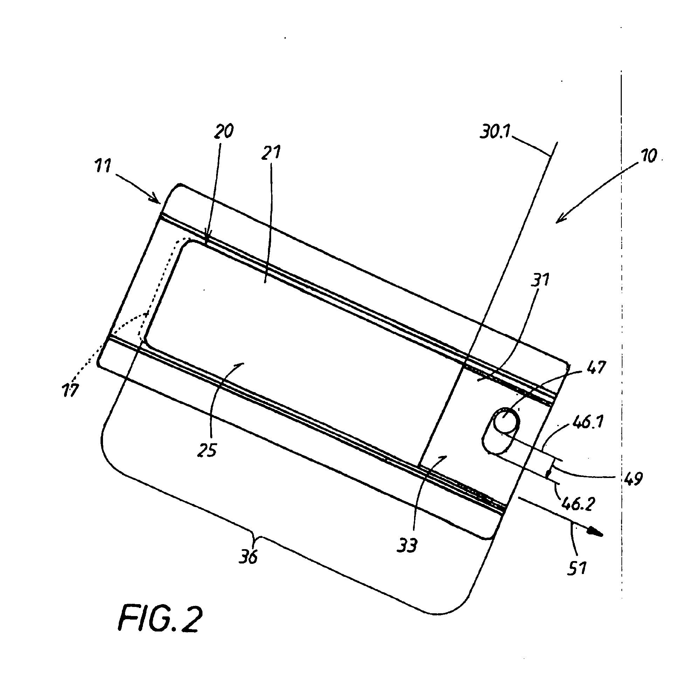

Bei Nicht-Gebrauch befindet sich der Notschlüssel 30 in seiner aus Fig. 1 und 2 ersichtlichen, durch eine Hilfslinie 30.1 gekennzeichneten Einsteckposition. Dann ist der Notschlüssel 30 mit seinem ganzen Schlüsselschaft 32 im Hülseninneren 26 aufgenommen. Dazu besitzt die Hülse 21 an ihrem dem Schlüsselkopf 31 zugekehrten Hülsenaußenende 29 ein Eintrittsloch 28. In der Einsteckposition 30.1 verschließt der Hülsenkopf 31 das Hülsen-Eintrittsloch 28. Das Hülseninnere 26 fungiert als Köcher für den Schlüsselschaft 32.

Am dem Hülsen-Eintrittsloch 28 gegenüberliegenden Innenende ist die Hülse 21 mit einem Absatz 27 versehen, der in der Einbaulage 20.1 der Baueinheit 20 gemäß Fig. 1 die gehäuseseitige Hinterschneidung 17 hintergreift. In der Einbaulage 20.1 erscheint auf der Rückseite 13 vom Gehäuse 11 einerseits die Oberseite 25 der Hülse 21 und andererseits die Schauseite 33 vom Schlüsselkopf 31. Diese beiden Flächenbereiche 25, 33 der Baueinheit 20 erfüllen gemeinsame die mit dem Bezugszeichen 36 gekennzeichnete "Deckelfunktion" gegenüber dem Gehäuse 11. Bei einer Alternative könnte der Notschlüssel 30 ganz oder teilweise mit dem Schlüsselkopf 31 im Hülseninneren verschwinden, weshalb dann die Deckelfunktion 36 überwiegend oder ganz von der Oberseite 25 der Hülse 21 erzeugt werden würde.

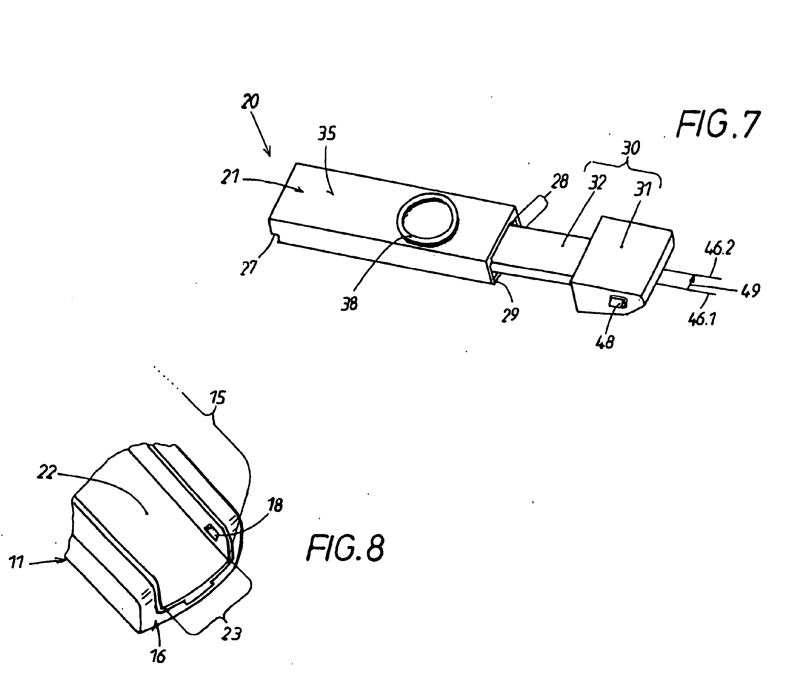

Wie Fig. 1 und 7 erkennen lässt, befindet sich an der Unterseite 35 ein Andruckprofil 38, das u.a. zur Lagesicherung der Batterie 40 dient. Gemäß Fig. 1 und 8 befindet sich im Bereich der Batterie 40 eine ringförmige elastomere Dichtung 45, die in der Einbaulage der Baueinheit 20 im Gehäuseinneren 14 dichtungswirksam wird. Ein Zusammenhalt zwischen der Baueinheit 20 und dem Gehäuse 11 kann durch Rastmittel 37, 39 geschehen, die z.B. gemäß Fig. 4b gestaltet sein können. Ein erster Teil des Rastmittels, z.B. ein Rasthaken, kann am Gehäuse 11 sitzen, während das zugehörige zweite Rastmittel, z.B. eine Rastöffnung 39 Bestandteil der Hülse 21 der Baueinheit 20 ist. Beim Ausbau der Baueinheit, die noch eingehender beschrieben werden wird, genügt es, eine ausreichend große manuelle Kraft auszuüben, um die Rastmittel 37, 39 voneinander zu lösen.

Zwischen der Baueinheit 20 und dem Gehäuse 11 ist vor allem eine zweiteilige Verriegelungseinrichtung 46 vorgesehen, mit welcher die Einsteckposition 30.1 des Notschlüssels 30 und/oder die Einbaulage 20.1 der ganzen Baueinheit 20 durch formschlüssige Verriegelungsmittel gesichert wird. Dazu besitzt die Verriegelungseinrichtung 46 zunächst einen aktiven Riegelteil 48, der federbelastet ist und sich im vorliegenden Fall im Schlüsselkopf 31 des Schlüssels 30 befindet. Aufgrund seiner Federbelastung ist der Riegelteil 48 bestrebt, in seine wirksame Verriegelungslage zu gelangen, wobei er, wie Fig. 7 zeigt, seitlich über die Begrenzung des Schlüsselkopfs 31 herausfährt.

Dem aktiven Riegelteil 48 ist ein passiver Gegenriegelteil 18 zugeordnet, der hier aus einer in der Seitenwand des Kanals 22 eingelassenen Riegelöffnung 18 besteht, wie Fig. 8 zeigt. In der Einbaulage 20.1 von Fig. 1 und 2 greift der Riegelteil 48 in die gehäuseseitige Riegelöffnung 18 hinein. Dadurch ist nicht nur die Einstecklage 30.1 des Notschlüssels 30 gesichert, sondern gleichzeitig die Einbaulage 20.1 der Hülse 21. Die als Deckel 36 fungierenden Flächenteile 25 und/oder 33 befinden sich dann in einem "Anbringungszustand", der die Gehäuse- bzw. Kanalöffnung 15 zuverlässig verschließt.

Um die Gehäuseöffnung 15 frei zu legen, muss zunächst die Verriegelungseinrichtung 46 unwirksam gesetzt werden. Dazu befindet sich eine Handhabe 47 an der Schauseite 33 vom Schlüsselkopf 31, die in Wirkverbindung mit dem dort integrierten aktiven Riegelteil 48 steht. Diese Handhabe 47 besteht im vorliegenden Fall aus einem Schieber, dessen Handhabungsfläche in einem Ausbruch des Schlüsselkopfes 31 manuell zugänglich ist. Aufgrund der erwähnten Federbelastung befindet sich die Handhabe normalerweise in ihrer durch die Hilfslinie 46.1 in Fig. 2 veranschaulichten Ruhelage, in welcher der Riegelteil 48 wirksam gesetzt ist.

Um die Verriegelungseinrichtung 46 unwirksam zu setzen, muss der Schieber 47 manuell um einen aus Fig. 2 ersichtlichen Betätigungsweg 49 in eine durch die dortige Hilfslinie 46.2 veranschaulichte zweite Stellung verschoben werden. Dann fährt der Riegelteil 48 mit seinem aus Fig. 7 ersichtlichen herausragenden Sperrelement ins Schlüsselinnere zurück und gibt die gehäuseseitige Riegelöffnung 18 von Fig. 8 frei. Dann ist ein Ausbau der Baueinheit möglich. Der Ausbau erfolgt im vorliegenden Fall in einer mehrphasigen Einrenkbewegung 50, was anhand der Fig. 2 bis 5b näher erläutert werden soll.

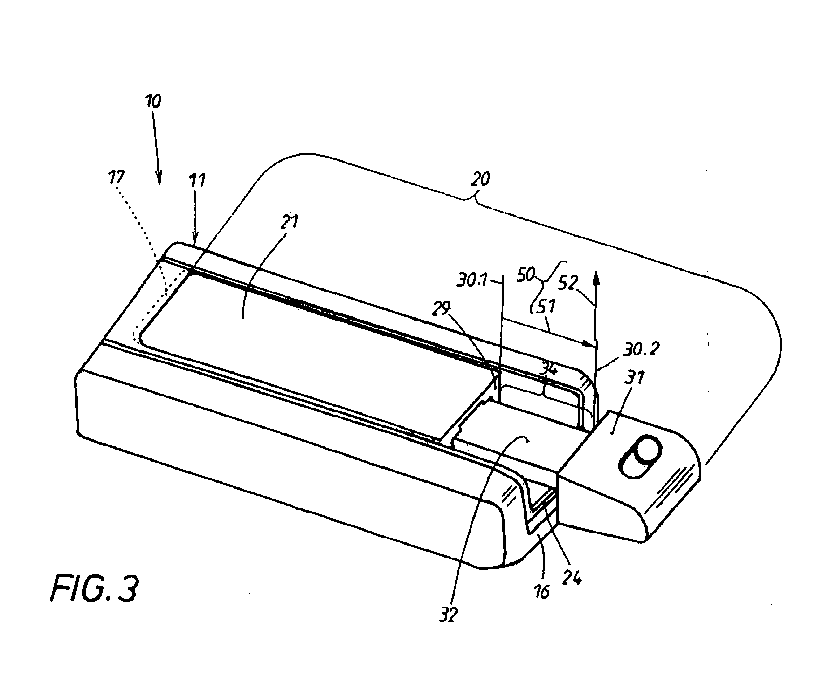

In einer ersten Phase 51 der Einrenkbewegung 50 wird der Notschlüssel 30 im Sinne des in Fig. 2 und 3 veranschaulichten Ausziehpfeils aus seiner ursprünglichen Einsteckposition 30.2 in eine in Fig. 3 durch eine weitere Hilfslinie 30.2 gekennzeichnete Ausfahrposition überführt. Dabei wird der Schlüsselschaft 32 um ein Teilstück 34 aus dem Kanaleingang 24 herausgezogen. Der Schlüsselkopf 31 überragt das Gehäuse-Stirnende 16. In der ersten Ausziehphase 51 verbleibt die Hülse 21 noch in ihrer ursprünglichen Einbaulage. Diese Einbaulage kann durch die vorerwähnten Rastmittel 37, 39 noch gesichert sein.

In einer zweiten Phase der Einrenkbewegung 30 wird der Schlüsselkopf 31 untergriffen und im Sinne des Pfeils 52 von Fig. 3 bzw. 4a hochgeschwenkt. Bei diesem Hochschwenken 52 fungiert der Notschlüssel 30 als ein verlängerter Hebelarm für die Baueinheit 20. Durch die Hebelwirkung kann leicht auf die vorerwähnten Rastmittel 37, 39 eine ausreichend große Kraft wirken, um den Rasteingriff zwischen der Hülse 21 und dem Gehäuse 11 zu lösen. Die beschriebene Gehäuse-Hinterschneidung 17 und der sich daran abstützende Hülsen-Absatz 27 fungieren beim Hochschwenken 52 als ein Drehgelenk 19. Die Baueinheit 20 kommt in eine durch die Hilfslinie 20.2 in Fig. 4 verdeutlichte Neigungslage gegenüber dem Gehäuse 20. Zugleich wird, wie Fig. 4a zeigt, die konvexe Hülsen-Verbreiterung 37 mit ihrem den Schlüsselkopf 31 zugekehrten Anfangsstück aus dem zugehörigen konkaven Ausschnitt 54 im Gehäuse 11 herausgehoben.

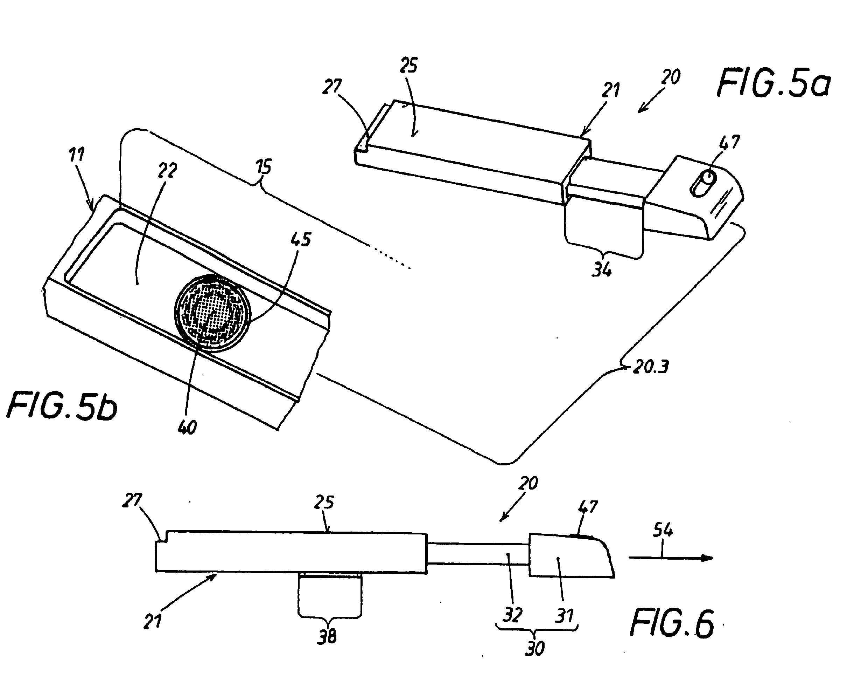

Der Neigungslage 20.2 von Fig. 4a schließt sich die dritte Phase 53 der Einrenkbewegung 50 an, in welcher die Baueinheit 20 aus dem Gehäuse-Kanal 22 entfernt wird. Jetzt wird auch die Hülse 21 im Sinne des Pfeils 53 von Fig. 4a aus dem Kanal 22 herausgenommen. Dabei löst sich der Hülsenabsatz 27 aus dem vorbeschriebenen Hinterschnitt 17 am Gehäuse-Kanal 22. Der Ausschubbewegung der dritten Phase 53 steht auch nicht die konvexe Hülsen-Verbreiterung 37 entgegen, weil diese, wie bereits gesagt wurde, schon in der Neigungslage 20.2 der Baueinheit 20 mit ihrem Anfangsstück außerhalb des konkaven Kanal-Ausschnitts 44 liegt. So kommt es zu der aus Fig. 5a und 5b ersichtlichen Ausbaulage der Baueinheit 20 gegenüber dem Gehäuse 11. Zum Gebrauch des Notschlüssels 30 braucht dieser, wie Fig. 6 durch den Pfeil 54 veranschaulicht, ganz aus der Hülse 21 herausgezogen werden.

Der Einbau der Baueinheit 20 vollzieht sich in umgekehrter Reihenfolge. Es ist aber auch eine Vereinfachung möglich, weil dabei in der Baueinheit 20 der Notschlüssel 30 bereits in seiner endgültigen Einsteckposition 30.1 gemäß Fig. 1 und 2 gebracht sein kann. Wie Fig. 7 erkennen lässt, ist es möglich, das Verriegelungselement vom aktiven Riegelteil 48 mit einer rückseitigen Auflaufschräge zu versehen. Bei einem Rückschwenken der Baueinheit 20 in einem zum Schwenkpfeil 52 von Fig. 4 entgegengerichteten Sinne stellt sich die Verriegelungseinrichtung 46 von selbst in ihre vorbeschriebene unwirksame Stellung 56.2, bis in der endgültigen Einbaulage 20.1 von Fig. 1 das Riegelelement vom Riegelteil 48 aufgrund seiner Federbelastung in die Riegelöffnung 18 einschnappt. Dann ist die Verriegelungseinrichtung 46 wieder in ihrer wirksamen Sperrstellung 46.1 und die ganze Baueinheit 20, also sowohl die Hülse 21 als auch der Notschlüssel 30 im Gehäuse 11 gesichert.

### Bezugszeichenliste:

- 10: elektronischer Schlüssel
- 11: Gehäuse von 10
- 12: Vorderseite von 11 13 Rückseite von 11
- 14: Gehäuseinneres von 11
- 15: Öffnung von 11 bzw. 22
- 16: Stirnende von 11
- 17: Hinterschneidung von 11
- 18: passiver Gegenriegelteil in 11, Riegelöffnung
- 19: Drehgelenk zwischen 17, 27 (Fig. 4a)
- 20: Baueinheit
- 20.1: Einbaulage von 20 (Fig. 1, 2)
- 20.2: Zwischenlage von 20 (Fig. 4a)
- 20.3: Ausbaulage von 20 (Fig. 5a, 5b)
- 21: Hülse von 20
- 22: Kanal in 11 für 20
- 23: Kanaleingang von 22 (Fig. 1, 4a, 9)
- 24: Kanalinnenende von 22 (Fig. 1)
- 25: Oberseite von 21
- 26: Hülseninneres von 21, Köcher für 32
- 27: Absatz an 21 für 17 (Fig. 1)
- 28: Eintrittsloch in 26
- 29: Hülsenaußenende von 21 (Fig. 3, 4a, 8)
- 30: Notschlüssel
- 30.1: Einsteckposition von 30 (Fig. 1, 2)
- 30.2: Ausfahrposition von 30 (Fig. 3, 4a)
- 31: Schlüsselkopf von 30
- 32: Schlüsselschaft von 30 mit mechanischen Codierungen (Fig. 1)
- 33: Schauseite von 31 (Fig. 1)
- 34: Teilstück von 32 (Fig. 3)
- 35: Unterseite von 21 (Fig. 7)
- 36: Deckelfunktion von 25, 33 (Fig. 1, 2)
- 37: Rastmittel, erster Teil, Rasthaken (Fig. 4b)
- 38: Andruckprofil an 35 (Fig. 1, 8)
- 39: Rastmittel, zweiter Teil, Rastöffnung (Fig. 4a, 4b)
- 40: elektrische Batterie (Fig. 1, 7)
- 41: Leiterplatte (Fig. 1)
- 42: Bauteile in 14, elektronisch, elektrisch und/oder mechanisch (Fig. 1)
- 43: Tastenfeld bei 12 (Fig. 1)

- 45: elastomere Dichtung (Fig. 1, 5b)
- 46: Verriegelungseinrichtung (Fig. 1)
- 46.1: wirksame Stellung von 46 (Fig. 2, 7)
- 46.2: unwirksame Stellung von 46 (Fig. 2, 7)
- 47: Handhabe für 48, Schieber (Fig. 1, 2, 3)
- 48: aktiver Riegelteil von 46, Sperrelement (Fig. 1, 7)
- 49: Betätigungsweg von 47 (Fig. 2, 7)
- 50: Einrenkbewegung von 20 (Fig. 3)
- 51: erste Phase von 50 (Fig. 3)
- 52: zweite Phase von 50 (Fig. 3, 4a)
- 53: dritte Phase von 50 (Fig. 4a)
- 54: Pfeil zum Herausziehen von 30 aus 21 (Fig. 6)

## Patentansprüche

1. Elektronischer Schlüssel (10) für fernbedienbare Schließsysteme in einem Fahrzeug,
mit einem Gehäuse (11), worin außer einer Elektronik (42) und einer elektrischen Batterie (40) für die Fernbedienung auch ein Notschlüssel (30) für eine mechanische Betätigung der Schließsysteme im Notfall angeordnet sind,
mit einer Verriegelungseinrichtung (46) zwischen dem Notschlüssel (30) und dem Gehäuse (11) zur Positionssicherung des Notschlüssels (30) bei Nicht-Gebrauch,
und mit einem lösbaren Deckel (36) an einer Außenfläche (13) vom Gehäuse (11),
wobei der Deckel (36) im Anbringungszustand eine Öffnung (15) im Gehäuse (11) verschließt und im Lösezustand das Gehäuseinnere (14) durch die Gehäuseöffnung (15) zugänglich macht,
**dadurch gekennzeichnet,**
**dass** der Deckel (36) zusammen mit dem Notschlüssel (30) eine vormontierte Baueinheit (20) gegenüber dem Gehäuse (11) bilden, wobei die Baueinheit (20) aus einer flachen Hülse (21) und dem Notschlüssel (30) besteht, und wobei der Notschlüssel (30) in die Hülse (21) einsteckbar its, und dass
die Baueinheit (20) in ihrer Einbaulage (20.1) im Gehäuse (11) die Gehäuseöffnung (15) verschließt und in ihrer Ausbaulage (20.3) freigibt
und **dass** die Verriegelungseinrichtung (46) für den Notschlüssel (30) zur Sicherung der Einbaulage (20.1) der ganzen Baueinheit (20) im Gehäuse (11) dient und damit auch den von der Baueinheit (20) gebildeten Deckel (36) in dessen Anbringungszustand in der Gehäuseöffnung (15) sichert.

2. Schlüssels nach Anspruch 1, wobei der Notschlüssel (30) einen zu seiner Handhabung dienenden Schlüsselkopf (31) und einen Schlüsselschaft (32) mit einer mechanischen Codierung aufweist, **dadurch gekennzeichnet,**
**dass** die zweiteilige Verriegelungseinrichtung (46) aus einem manuell betätigbaren (49) aktiven Riegelteil (48) und einem unbetätigbaren passiven Gegenriegelteil (18) besteht
und **dass** der aktive Riegelteil (48) der Verriegelungseinrichtung (46) im Schlüsselkopf (31) des Notschlüssels (30) angeordnet ist, während der passive Gegenriegelteil (18) sich im Gehäuse (11) befindet.

3. Schlüssel nach Anspruch 1 oder 2, **dadurch gekennzeichnet, dass** der Schlüsselkopf (31) vom Notschlüssel (30) eine Handhabe (47) zum Unwirksamsetzen (46.2) und/oder Wirksamsetzen (46.1) der Verriegelungseinrichtung (46) aufweist
und dass in der Einbaulage (20.1) der Baueinheit (20) im Gehäuse (11) die Handhabe (47) der Verriegelungseinrichtung (46) von der Außenseite der Baueinheit (20) aus zugänglich ist.

4. Schlüssel nach einem der Ansprüche 1 bis 3, **dadurch gekennzeichnet, dass** in der Einbaulage (20.1) der Baueinheit (20) die Oberseite (25) vom Deckel und die Schauseite (33) vom Schlüsselkopf (31) eine Deckelfunktion (36) für die Gehäuse-Öffnung (15) bilden.

5. Schlüssel nach einem der Ansprüche 1 bis 4, **dadurch gekennzeichnet, dass** der von der Baueinheit (20) erzeugte Deckel eine Aufnahme (26) für den
Schlüsselschaft (32) des Notschlüssels (30) besitzt, in welche der Schlüsselschaft (32) einsteckbar ist,
und dass in der Einbaulage (20.1) der Baueinheit (20) und in Einsteckposition (30.1) des Notschlüssels (30) wenigstens jene Breitfläche vom Schlüsselkopf (31), welche die Handhabe (47) der Verriegelungseinrichtung (46) aufweist, neben der schauseitigen Oberseite (25) vom Deckel der Baueinheit (20) zu liegen kommt.

6. Schlüssel nach einem der Ansprüche 1 bis 5, **dadurch gekennzeichnet, dass** der Deckel der Baueinheit (20) als flache Hülse (21) ausgebildet ist,
dass die Hülse (21) an ihrem dem Schlüsselkopf (31) zugekehrten Hülsenende (29) ein Eintrittsloch (28) aufweist, welches zum Einstecken des Schlüsselschafts (32) vom Notschlüssel (30) dient,
dass in der Einsteckposition (30.1) des Notschlüssels (30) das Hülseninnere (26) als Köcher für den Schlüsselschaft (32) fungiert
und dass der Schlüsselkopf (31) vom Notschlüssel (30) in der Einbaulage (20.1) der Baueinheit (20) im Gehäuse (11) das Eintrittsloch (28) der Hülse (21) verschließt.

7. Schlüssel nach einem der Ansprüche 1 bis 6, **dadurch gekennzeichnet, dass** das Gehäuse (11) im Bereich seiner Außenfläche (13) einen offenen Kanal (22) aufweist,
und dass der Kanal (22) in der Einbaulage (20.1) die Baueinheit (20) aufnimmt und dann der Deckel/Hülse (21) und der Schlüsselkopf (31) vom Notschlüssel (30) im Kanal (22) nebeneinander liegen.

8. Schlüssel nach Anspruch 7, **dadurch gekennzeichnet, dass** die Einbaulage (20.1) der Baueinheit (20) durch Rastmittel (37, 39) gesichert ist, die in zueinander komplementärer Ausführung zwischen dem Deckel/Hülse (21) und dem Gehäuse/Kanal (22) andererseits angeordnet sind.

9. Schlüssel nach einem der Ansprüche 1 bis 8, **dadurch gekennzeichnet, dass** die Baueinheit (20) oder wenigstens eines ihrer Bestandteile, wie der Deckel/Hülse (21) und/oder der Notschlüssel (30), beim Übergang zwischen der Einbaulage (20.1) und der Ausbaulage (20.3) gegenüber dem Gehäuse (11) eine definierte mehrphasige (51 bis 53) Einrenkbewegung (50) durchlaufen.

10. Schlüssel nach einem der Ansprüche 7 bis 9, **dadurch gekennzeichnet, dass** die Gehäuse-/Kanal-Öffnung (15) an ihrem einen Öffnungsende (24) eine Hinterschneidung (17) aufweist
und dass das zugehörige Ende der Baueinheit (20) einen Absatz (27) besitzt, der sowohl in der Einbaulage (20.1) der Baueinheit (20) als auch während der ersten oder letzten Phase (30.2) während des Aus- oder Einbaus die Hinterschneidung (17) hintergreift.

11. Schlüssel nach einem der Ansprüche 7 bis 9, **dadurch gekennzeichnet, dass** der Kanal (22) am einen stirnseitigen Gehäuse-Ende (16) einen offenen Kanaleingang (23) besitzt
und dass in der Einbaulage (20.1) der Baueinheit (20) der Schlüsselkopf (31) vom Notschlüssel (30) mit seiner äußeren Stirnfläche den Kanaleingang (23) verschließt.

12. Schlüssel nach einem der Ansprüche 9 bis 11, **dadurch gekennzeichnet, dass** nach dem Unwirksamsetzen (46.2) der Verriegelungseinrichtung (46) der Schlüsselkopf (31) vom Notschlüssel (30) in einer weiteren Phase (51) der Einrenkbewegung (50) aus seiner Einsteckposition (30.1) im Deckel/Hülse (21) mit einem Teilstück (34) seines Schlüsselschafts (32) in eine Ausfahrposition (30.2) herausgezogen wird, wo er aus dem Kanaleingang (23) herausragt,
und dass, ausgehend von seiner Ausfahrposition (30.2), der Notschlüssel (30) in der nächsten Phase (52) der Einrenkbewegung (50) als Hebelarm zum Herausschwenken der Baueinheit (20) aus der Gehäuse-/Kanal-Öffnung (15) dient.

13. Schlüssel nach einem der Ansprüche 10 bis 12, **dadurch gekennzeichnet, dass** das mit der Hinterschneidung (17) versehene Öffnungs-Ende dem offenen Kanaleingang (23) vom Gehäuse (11) gegenüberliegt
und dass die Hinterschneidung (17) an der Gehäuse-/Kanal-Öffnung (15) einerseits und der Absatz (27) am Deckel/Hülse (21) andererseits als Drehgelenk (19) beim Herausschwenken (52) der Baueinheit (20) aus dem Gehäuse (11) fungieren.

14. Schlüssel nach einem der Ansprüche 1 bis 13, **dadurch gekennzeichnet, dass** die Baueinheit (20) in der Einbaulage (20.1) eine Kammer im Gehäuseinneren (14) überdeckt, in welcher die elektrische Batterie (40) für die Fernbedienung angeordnet ist,
und dass in der Ausbaulage (20.3) die Batterie (40) im Gehäuseinneren (14) zugänglich und auswechselbar ist.

15. Schlüssel nach einem der Ansprüche 1 bis 14, **dadurch gekennzeichnet, dass** die Baueinheit (20) an ihrer dem Gehäuseinneren (14) zugekehrten Unterseite (35) ein Andruckprofil (38) zur Lagesicherung der Elektronik oder der Batterie (40) aufweist.

16. Schlüssel nach einem der Ansprüche 1 bis 15, **dadurch gekennzeichnet, dass** die Baueinheit (20) in ihrer Einbaulage (20.1) eine im Gehäuseinneren (14) befindliche elastomere Dichtung (45) zusammendrückt und dichtungswirksam setzt.

17. Schlüssel nach einem der Ansprüche 4 bis 16, **dadurch gekennzeichnet, dass** der aktive Riegelteil der Verriegelungseinrichtung der Baueinheit und/oder ihre Handhabe am Deckel/Hülse der Baueinheit angeordnet sind.

18. Schlüssel nach einem der Ansprüche 1 bis 17, **dadurch gekennzeichnet, dass** das Gehäuse an seiner einen Außenfläche (12) ein Tastenfeld (43) zur manuellen Betätigung der Fernbedienung aufweist
und dass diese Außenfläche (12) der die Baueinheit (20) aufnehmenden weiteren Außenfläche (13) gegenüberliegt.

## Claims

1. Electronic key (10) for remote controlled locking systems in a vehicle,
with a casing (11) in which is arranged, besides electronics (42) and an electric battery (40) for the remote control, also an emergency key (30) for mechanical operation of the locking systems in an emergency,
with a locking device (46) between the emergency key (30) and the casing (11) for securely positioning the emergency key (30) when not in use,
and with a removable cover (36) on the outer surface (13) of the casing (11),
whereby the cover (36), when ready to attach, blocks an opening (15) in the casing (11), and when ready to remove, renders the casing interior (14) accessible through the casing opening (15),
thereby **characterized,**
**in that** the cover (36) together with the emergency key (30) form a preassembled structural unit (20) compared to the casing (11), whereby the structural unit (20) comprises a flat cartridge (21) and the emergency key (30), and whereby the emergency key (30) can be inserted in the cartridge (21), and in that
the structural unit (20), in its mounted position (20.1) in the casing (11), blocks the casing opening (15), and in its dismount position (20.3) deblocks it,
and **in that** the locking device (46) for the emergency key (30) acts to secure the mounted position (20.1) of the entire structural unit (20) in the casing (11), and thereby likewise secures the cover (36) formed by the structural unit (20) in its attachment state in the casing opening (15).

2. Key pursuant to Claim 1, whereby the emergency key (30) exhibits a key head (31) for handling it, and a key shaft (32) with mechanical coding, thereby **characterized**
**in that** the two-part locking device (46) comprises a manually operable (49) active interlock element (48) and an inoperable passive counter-interlock element (18),
and **in that** the active interlock element (48) of the locking device (46) is arranged in the key head (31) of the emergency key (30) while the passive counter-interlock element (18) is in the casing (11).

3. Key pursuant to Claim 1 or 2, thereby **characterized in that** the key head (31) of the emergency key (30) exhibits an operating handle (47) for rendering the locking device (46) inoperable (46.2) and/or operable (46.1),
and **in that** in the mounted position (20.1) of the structural unit (20) in the casing (11) the operating handle (47) of the locking device (46) is accessible from the exterior of the structural unit (20).

4. Key pursuant to one of the claims 1 to 3, thereby **characterized in that** in the mounted position (20.1) of the structural unit (20) the top side (25) of the cover and the visible side (33) of the key head (31) form a covering function (36) for the casing opening (15).

5. Key pursuant to one of the claims 1 to 4, thereby **characterized in that** the cover formed by structural unit (20) has an acceptance (26) for the emergency key (30) key shaft (32) into which the key shaft (32) can be inserted,
and **in that** in the mounted position (20.1) of the structural unit (20) and in the inserted position (30.1) of the emergency key (30), at least the broad surface of the key head (31), i.e. the surface which exhibits the operating handle (47) of the locking device (46), comes to rest next to the visible top side (25) of the cover of the structural unit (20).

6. Key pursuant to one of the claims 1 to 5, thereby **characterized in that** the cover of the structural unit (20) is designed as a flat cartridge (21),
**in that** the cartridge (21) exhibits on the cartridge end (29) facing the key head (31) an entrance hole (28) for inserting the key shaft (32) of the emergency key (30),
**in that** in the insertion position (30.1) of the emergency key (30) the cartridge interior (26) acts as a receptacle for the key shaft (32),
and **in that** the key head (31) of the emergency key (30), in the mounted position (20.1) of the structural unit (20) in the casing (11), blocks the entrance hole (28) of the cartridge (21).

7. Key pursuant to one of the claims 1 to 6, thereby **characterized in that** the casing (11) exhibits in the range of its outer surface (13) an open channel (22),
and **in that** in the mounted position (20.1) the channel (22) accommodates the structural unit (20), and then the cover/cartridge (21) and the key head (31) of the emergency key (30) lie next to each other in the channel (22).

8. Key pursuant to Claim 7, thereby **characterized in that** the mounted position (20.1) of the structural unit (20) is secured by engagement elements (37, 39) which in mutually complementary design are arranged contrariwise between the cover/cartridge (21) and the casing/channel (22).

9. Key pursuant to one of the claims 1 to 8, thereby **characterized in that** the structural unit (20) or at least one of its components, like the cover/cartridge (21) and/or the emergency key (30), during the transition between the mounted position (20.1) and the dismount position (20.3) go through a defined multi-phased (51 to 53) adjustment movement (50) opposite the casing (11).

10. Key pursuant to one of the claims 7 to 9, thereby **characterized in that** the casing/channel opening (15) exhibits on its one opening-end (24) a back taper (17),
and **in that** the associated end of the structural unit (20) has a ledge (27) which in the mounted position (20.1) of the structural unit (20) as well as in the first or last phase (30.2) during assembly or disassembly engages behind the back taper (17).

11. Key pursuant to one of the claims 7 to 9, thereby **characterized in that** the channel (22) has an open channel entry (23) on a front casing end (16),
and **in that** in the mounted position (20.1) of the structural unit (20) the key head (31) of the emergency key (30) blocks the channel entry (23) with its exterior front surface.

12. Key pursuant to one of the claims 9 to 11, thereby **characterized in that** subsequent to the rendering inoperable (46.2) of the locking device (46) the key head (31) of the emergency key (30), in a further phase (51) of the adjustment movement (50), is drawn out of its inserted position (30.1) in the cover/cartridge (21) with a section (34) of its key shaft (32) into a deploy position (30.2) where it protrudes from the channel entry (23),
and **in that** from its deploy position (30.2) the emergency key (30) acts in the next phase (52) of the adjustment movement (50) as a lever arm to swing the structural unit (20) out of the casing/channel opening (15).

13. Key pursuant to one of the claims 10 to 12, thereby **characterized in that** the opening end provided with the back taper (17) lies opposite the open channel entry (23) of the casing (11),
and **in that** on the one hand the back taper (17) on the casing/channel opening (15) and on the other hand the ledge (27) on the casing/cartridge (21) act as a swivel-joint (19) when swinging (52) the structural unit (20) out of the casing (11).

14. Key pursuant to one of the claims 1 to 13, thereby **characterized in that** the structural unit (20), in the mounted position (20.1), covers a chamber in the casing interior (14) in which is arranged the electric battery (40) for the remote control,
and **in that** in the dismount position (20.3) the battery (40) in the casing interior (14) is accessible and can be exchanged.

15. Key pursuant to one of the claims 1 to 14, thereby **characterized in that** the structural unit (20) exhibits on its underside (35) which faces the casing interior (14) a press form (38) for securely positioning the electronics or the battery (40).

16. Key pursuant to one of the claims 1 to 15, thereby **characterized in that** the structural unit (20) in its mounted position (20.1) presses together an elastomeric sealing (45) found in the casing interior (14) and renders it active as a sealant.

17. Key pursuant to one of the claims 4 to 16, thereby **characterized in that** the active interlock element of the locking device of the structural unit and/or its operating handle are arranged on the cover/cartridge of the structural unit.

18. Key pursuant to one of the claims 1 to 17, thereby **characterized in that** the casing has on its one outer surface (12) a keypad (43) for manual operation of the remote control,
and **in that** this outer surface (12) lies opposite the further outer surface (13) which accepts the structural unit (20).

## Revendications

1. Clé électronique (10) pour systèmes de fermeture télécommandables embarqués en véhicule,
comprenant un boîtier (11) dans lequel sont agencés, hormis un circuit électronique (42) et une batterie (40) électrique alimentant la télécommande, également une clé d'urgence (30) permettant en cas d'urgence d'actionner mécaniquement les systèmes d'ouverture/fermeture,
comprenant un équipement de verrouillage (46) situé entre la clé d'urgence (30) et le boîtier (11), pour sécuriser la clé d'urgence (30) en position lorsqu'elle ne sert pas,
et avec un couvercle détachable (36) situé contre une surface extérieure (13) du boîtier (11),
sachant que le couvercle (36), lorsqu'en place, obture un orifice (15) situé dans le boîtier (11) et, lorsque détaché, rend l'intérieur (14) du boîtier accessible par le biais de l'orifice (15) ménagé dans ce même boîtier,
**caractérisée en ce que**
le couvercle (36) constitue, avec la clé d'urgence (30), une unité (20) prémontée en face du boîtier (11), sachant que l'unité (20) se compose d'une douille plate (21) et de la clé d'urgence (30), et que cette clé d'urgence (30) se laisse introduire dans la douille (21),
et **en ce que** l'unité (20) en position incorporée (20.1) dans le boîtier (11) obture l'orifice (15) du boîtier et le rend accessible lorsqu'en position déposée (20.3),
et **en ce que** l'équipement de verrouillage (46) de la clé d'urgence (30) sert à sécuriser l'ensemble de l'unité (20) en position incorporée (20.1) dans le boîtier (11), et qu'il sécurise ainsi également le couvercle (36) formé par l'unité (20) lorsque ce dernier se trouve à l'état fixé dans l'orifice (15) du boîtier.

2. Clé selon la revendication 1, sachant que la clé d'urgence (30) présente une tête (31) servant à la manier et une tige (32) présentant un codage mécanique, **caractérisée en ce que**,
le dispositif de verrouillage (46) en deux parties se compose d'un verrou (48) actif actionnable (49) manuellement et d'un verrou antagoniste (18) passif non actionnable
et **en ce que** le verrou (48) actif du dispositif de verrouillage (46) est agencé dans la tête (31) de la clé d'urgence (30), tandis que le verrou antagoniste (18) passif se trouve dans le boîtier (11).

3. Clé selon la revendication 1 ou 2, **caractérisée en ce que** la tête (31) de la clé d'urgence (30) présente un moyen de maniement (47) servant à rendre le dispositif de verrouillage (46) inopérant (46.2) et/ou opérant (46.1)
et **en ce que** lorsque l'unité (20) se trouve position incorporée (20.1) dans le boîtier (11), le moyen de maniement (47) du dispositif de verrouillage (46) est accessible depuis le côté extérieur de l'unité (20).

4. Clé selon l'une des revendications 1 à 3, **caractérisée en ce que** lorsque l'unité (20) se trouve en position incorporée (20.1), le côté supérieur (25) du couvercle et le côté apparent (33) de la tête (31) de clé remplissent une fonction de couvercle (36) obturant l'orifice (15) du boîtier.

5. Clé selon l'une des revendications 1 à 4, **caractérisée en ce que** le couvercle généré par l'unité (20) possède un réceptacle (26) recevant la tige (32) de la clé d'urgence (30), réceptacle dans lequel il est possible d'emboîter la tige (32) de la clé
et **en ce que** lorsque l'unité (20) se trouve dans la position d'incorporation (20.1) et que la clé d'urgence (30) se trouve en position emboîtée (30.1), au moins la surface large de la tête (31) de la clé présentant le moyen de maniement (47) du dispositif de verrouillage (46) vient appliquer couchée à côté du dessus (25) apparent du couvercle de l'unité (20).

6. Clé selon l'une des revendications 1 à 5, **caractérisée en ce que** le couvercle de l'unité (20) est configuré en douille plate (21),
**en ce que** l'extrémité (29) de la douille (21) regardant la tête (31) de clé présente un orifice de pénétration (28) servant à introduire la tige (32) de la clé d'urgence (30),
**en ce que** lorsque la clé d'urgence (30) se trouve en position enfichée (30.1), l'intérieur (26) de la douille officie de fourreau pour la tige (32) de la clé
et **en ce que**, lorsque l'unité (20) est en position incorporée (20.1) dans le boîtier (11), la tête (31) de la clé d'urgence (30) obture l'orifice de pénétration (28) de la douille (21).

7. Clé selon l'une des revendications 1 à 6, **caractérisée en ce que** le boîtier (11) présente dans la zone de sa surface extérieure (13) un canal (22) ouvert
et **en ce qu'**en position d'incorporation (20.1) le canal (22) reçoit l'unité (20) et qu'ensuite le couvercle/la douille (21) et la tête (31) de la clé d'urgence (30) se retrouvent juxtaposés dans le canal (22).

8. Clé selon la revendication 7, **caractérisée en ce que** la position d'incorporation (20.1) de l'unité (20) est sécurisée par des crans (37, 39) agencés dans un ordre réciproquement complémentaire entre le couvercle/la douille (21) et le boîtier/canal (22).

9. Clé selon l'une des revendications 1 à 8, **caractérisée en ce que** l'unité (20) ou au moins l'un de ses constituants tels que le couvercle/la douille (21) et/ou la clé d'urgence (30) exécutent par rapport au boîtier (11) un mouvement défini de remboîtement (50) multiphases (51 à 53) lors du passage de la position incorporée (20.1) à la position déposée (20.3).

10. Clé selon l'une des revendications 7 à 9, **caractérisée en ce que** l'orifice (15) boîtier / canal présente en son extrémité (24) une contre-dépouille (17)
et **en ce que** l'extrémité afférente de l'unité (20) possède un épaulement (27) qui, lorsque l'unité (20) se trouve aussi bien en position incorporée (20.1) qu'au cours de la première ou de la dernière phase (30.2), pénètre derrière la contre-dépouille (17) pendant la dépose ou l'incorporation.

11. Clé selon l'une des revendications 7 à 9, **caractérisée en ce que** le canal (22) possède, contre une extrémité (16) frontale du boîtier, une entrée (23) ouverte
et **en ce que** lorsque l'unité (20) se trouve en position incorporée (20.1), la surface frontale de la tête (31) de la clé d'urgence (30) obture l'entrée (23) du canal.

12. Clé selon l'une des revendications 9 à 11, **caractérisée en ce qu'**après avoir rendu inopérant (46.2) le dispositif de verrouillage (46), la tête (31) de la clé d'urgence (30) est, au cours d'une phase (51) supplémentaire du mouvement de remboîtement (50), extraite hors de sa position emboîtée (30.1) dans le couvercle/la douille (21) avec une partie (34) de la tige (32) de clé et amenée dans une position sortie (30.2), depuis laquelle elle fait saillie hors de l'entrée (23) du canal
et **en ce que** partant de sa position sortie (30.2), la clé d'urgence (30) officie, au cours de la phase suivante (52) du mouvement de remboîtement (50), de bras de levier servant à faire basculer l'unité (20) hors de l'orifice (15) du boîtier/canal.

13. Clé selon l'une des revendications 10 à 12, **caractérisée en ce que** l'extrémité d'orifice dotée d'une contre-dépouille (17) se trouve en face de l'entrée de canal ouverte (23) du boîtier (11)
et **en ce que** la contre-dépouille (17) située contre l'orifice (15) du boîtier/canal d'une part et l'épaulement (27) contre le couvercle/la douille (21) d'autre part officient d'articulation tournante (19) lorsque l'unité (20) bascule (52) hors du boîtier (11).

14. Clé selon l'une des revendications 1 à 13, **caractérisée en ce que** l'unité (20) en position incorporée (20.1) recouvre un compartiment situé à l'intérieur (14) du boîtier, dans lequel est agencée la batterie électrique (40) alimentant la télécommande
et **en ce qu'**en position déposée (20.3) la batterie (40) est accessible à l'intérieur du boîtier (14) et interchangeable.

15. Clé selon l'une des revendications 1 à 14, **caractérisée en ce que** l'unité (20) présente, sur sa face inférieure (35) regardant l'intérieur (14) du boîtier, un profilé d'applique (38) servant à sécuriser le circuit électronique ou la batterie (40) en position.

16. Clé selon l'une des revendications 1 à 15, **caractérisée en ce que** l'unité (20) lorsqu'en position incorporée (20.1) comprime un joint (45) en élastomère situé à l'intérieur (14) du boîtier et fait que ce joint étanchéise.

17. Clé selon l'une des revendications 4 à 16, **caractérisée en ce que** le verrou actif du dispositif de verrouillage de l'unité et/ou son moyen de maniement sont agencés sur le couvercle/la douille de l'unité.

18. Clé selon l'une des revendications 1 à 17, **caractérisée en ce qu'**une surface extérieure (12) du boîtier présente un champ (43) de touches servant à actionner manuellement la télécommande
et **en ce que** cette surface extérieure (12) se trouve en face de la surface extérieure (13) supplémentaire recevant l'unité (20).
